# EUROPEAN PATENT SPECIFICATION

(11) **EP 2 456 622 B1**
(45) Date of publication and mention of the grant of the patent: **18.07.2018**
(21) Application number: 09847640.1
(22) Date of filing: 22.07.2009
(51) Int. Cl.: B41J 2/21, B41J 11/00, C09D 11/30, C09D 11/54, B41M 7/00

(54) **INKJET PRINTING SYSTEM**
TINTENSTRAHLDRUCKSYSTEM
SYSTÈME D'IMPRESSION À JET D'ENCRE

(43) Date of publication of application: 30.05.2012
(73) Proprietor: Hewlett-Packard Development Company, L. P., Houston, TX 77070 (US)
(72) Inventor: TOM, Howard, S., Palo Alto, CA 94304-1100 (US); GANAPATHIAPPAN, Sivapackia, Palo Alto, CA 94304-1100 (US); NG, Hou, T., Palo Alto, CA 94304-1100 (US)
(74) Representative: Lawman, Matthew John Mitchell
(86) International application number: PCT/US2009/051358
(87) International publication number: WO 2011/010999

(56) References cited:
- US-A- 5 792 249
- US-A1- 2003 202 039
- US-A1- 2005 137 319
- US-A1- 2005 225 618
- US-A1- 2006 199 877
- US-A1- 2007 216 743
- US-A1- 2007 296 784
- US-A1- 2007 296 789
- US-B1- 6 528 581
- US-B1- 6 779 884
- US-B1- 6 818 685
- US-B2- 6 428 143
- US-B2- 6 863 392

## Description

### BACKGROUND

The present disclosure relates generally to inkjet printing systems.

Inkjet printing processes are used to effectively produce a printed image on a surface of a print medium. During inkjet printing, ink drops are generally ejected from a nozzle of a printhead at high speed by an inkjet printing system and are deposited onto the medium to produce the printed image on the surface thereof. In many cases, differences between one or more surface properties (e.g., surface roughness, specular reflectance, gloss, etc.) of the medium and that of the printed image may affect optical density, thereby affecting the visual appearance of the printed image. US-A-5 792 249 describes an ink-jet printing apparatus as defined in the preamble of claim 1.

### BRIEF DESCRIPTION OF THE DRAWINGS

Features and advantages of embodiments of the present disclosure will become apparent by reference to the following detailed description and drawings, in which like reference numerals correspond to similar, though perhaps not identical, components. For the sake of brevity, reference numerals or features having a previously described function may or may not be described in connection with other drawings in which they appear.

Fig. 1 is a semi-schematic view of an inkjet printing system according to an embodiment of the instant disclosure;

Fig. 2 is a flow diagram depicting an embodiment of a method of controlling optical density during an ink-jet printing process; and

Figs. 3A and 3B are schematic, cross-sectional views of a medium having i) a latex coating composition established on a region of a medium surrounding a printed image formed thereon (Fig. 3A), and ii) a latex coating composition established on the printed image and on the region of the medium surrounding the image (Fig. 3B). It is to be understood that the medium, the coating composition, and the printed image depicted in Figs. 3A and 3B are enlarged and are not drawn to scale.

### DETAILED DESCRIPTION

Embodiment(s) of the inkjet printing system, as disclosed herein, may advantageously be used to produce a printed image on a medium having improved optical density. The printed image may be formed by establishing a colorant inkjet ink composition on the medium, and then establishing a latex coating composition either i) on a region of the medium surrounding the printed image, or ii) on the printed image and on the region of the medium surrounding the printed image. Without being bound to any theory, it is believed that the establishing of the latex coating composition in such a manner reduces any differences between surface properties of the medium and that of the printed image so that the perceived optical density of the printed image is significantly improved. In some instances, the optical density is improved or enhanced by about 1% to about 20%. Furthermore, the latex coating composition is substantially clear and generally does not deleteriously affect the color of the printed image and/or of the underlying medium.

The colorant ink composition may be selected from any ink composition that is suitable for use in inkjet printing processes (non-limiting examples of which include continuous inkjet printing, thermal inkjet printing, drop-on-demand inkjet printing, piezoelectric inkjet printing, and/or the like). The colorant ink composition generally includes a colorant and an ink vehicle. As used herein, the term "colorant" refers to one or more pigments, one or more dyes, or combinations of pigment(s) and dye(s). Suitable pigments include self-dispersed pigments and non-self-dispersed pigments. Self-dispersed pigments include those that have been chemically modified at the surface with a charge or a polymeric grouping. This chemical modification aids the pigment in becoming dispersible and/or substantially remaining dispersed in the selected ink vehicle. A non-self-dispersed pigment requires a separate and unattached dispersing agent (e.g., polymers, oligomers, surfactants, etc.) in the ink vehicle or physically coated on the surface of the pigment in order to disperse within the selected ink vehicle.

As used herein, the term "ink vehicle" refers to the combination of one or more solvents to form a vehicle in which the colorant is placed to form the ink composition. In some examples, the ink vehicle includes water in combination with one or more other solvents. Such ink vehicles are referred to herein as aqueous ink vehicles. In an embodiment, the ink vehicle may also include one or moreadditional components such as, e.g., surfactants, polymeric binders, additives, and/or the like. As used herein, the term "additive" refers to a constituent of the ink vehicle that operates to enhance performance, environmental effects, aesthetic effects, or other similar properties of the ink. Non-limiting examples of additives include buffers, biocides, sequestering agents, chelating agents, or the like, or combinations thereof.

The ink composition may be prepared, for example, by combining the colorant with the ink vehicle. It is believed that any inkjet ink composition may be used with the latex coating composition disclosed herein.

The latex coating composition very generally includes latex polymerparticles dispersed in a vehicle. The latex polymer particles are formed from at least one hydrophobic monomer and at least one acidic monomer.

The hydrophobic monomer(s) of the latex particles may be present in an amount up to 99.9 wt% of all of the monomers forming the latex polymer particles. In alternate embodiments, the hydrophobic monomer(s) may be present in an amount ranging from about 70 wt% up to 98 wt%, or from about 80wt% up to 98 wt% of the monomers forming the latex polymer particles. Non-limiting examples of suitable hydrophobic monomers include methyl methacrylate, ethyl methacrylate, propyl methacrylate, butyl methacrylate, hexyl methacrylate, 2-ethylhexyl methacrylate, lauryl methacrylate, octadecyl methacrylate, isobornyl methacrylate, vinyl acetate, methyl acrylate, ethyl acrylate, propyl acrylate, butyl acrylate, hexyl acrylate, 2-ethylhexyl acrylate, lauryl acrylate, octadecyl acrylate, isobornyl acrylate, styrene, methylstyrene, vinylbenzene chloride, and combinations thereof. Further, mixtures of the monomers may be used to adjust the glass transition temperature (T_{g}) of the composite latex polymer particles and the effectiveness of the printed coating composition.

The acidic monomer(s) of the latex polymer particles may be present in an amount ranging from about 0.1 wt% to about 30 wt% of all of the monomers forming the latex polymer particles. In alternate embodiments, the acidic monomer(s) may be present in an amount ranging from about 0.5 wt% to about 20 wt%, or from about 0.5 wt% to about 5 wt% of the monomers forming the latex polymer particles. Non-limiting examples of suitable acid-containing monomers include acrylic acid, methacrylic acid, itaconic acid, maleic acid, vinyl benzoic acid, or derivatives thereof, or combinations thereof.

The acidic monomer(s) may advantageously provide stability to the latex polymer particles so that they are stable in water, which is present in the vehicle (which will be described in further detail below). More particularly, the acidic monomer(s) incorporate charges to the particles, which contribute to their stability. The charge of the particles may be further enhanced by raising the pH of the medium on which the ink and the coating composition will be established to convert -COOH functional groups of the acid into a salt form.

In an embodiment, at least one cross-linkable monomer may be used in addition to the hydrophobic monomer(s) and the acidic monomer(s) to form the latex polymer particles. The presence of the cross-linkable monomer(s) may, in some instances, improve the printability of the latex coating composition. In an example, the cross-linkable monomer(s) is/are present in an amount up to 15 wt% of all of the monomers forming the latex polymer particles. In alternate embodiments, the cross-linkable monomer(s) may be present in an amount ranging from about 0.2 wt% to about 10 wt%, or from about 0.2 wt% to about 1 wt% of the monomers. Non-limiting examples of cross-linkable monomers that may be used in forming the latex polymer particles include cross-linker interactive monomers. Cross-linker interactive monomers are monomers having moieties configured to react with the cross-linker compound(s) in the ink composition. In an embodiment, suitable cross-linker interactive monomers include those with keto groups. The general structure for the cross-linker interactive monomer is the following: 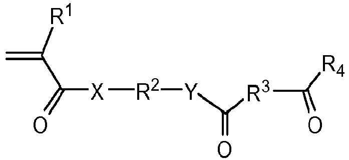 where:
R1 = H or CH₃;
X = Y = a divalent hetero atom linking group, e.g., O, NH, S or just a bond;
R2 = R3 = a divalent linking group, e.g., alkylene (CH₂CH₂) or arylene; and
R4 = an alkyl, aryl or substituted alkyl/aryl group.

Non-limiting examples of such cross-linker interactive monomers include 2-(methacryloyloxy)ethyl acetoacetate: 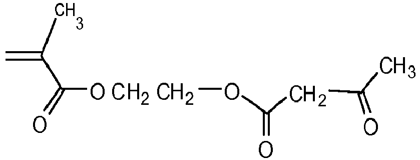 and diacetone acrylamide:

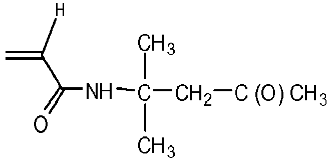

In an embodiment, the T_{g} of the latex polymer particles ranges from about -40°C to about +125°C. In another embodiment, the T_{g} ranges from about 0°C to about 75°C. In yet another embodiment, the T_{g} ranges from about 15°C to about 65°C.

In a non-limiting example, the amount of latex polymer particles present in the latex coating composition ranges from about 0.5 wt% to about 40 wt%. In another non-limiting example, the amount of latex polymer particles ranges from about 1 wt% to about 40 wt%. In still another non-limiting example, the amount of latex polymer particles ranges from about 1 wt% to about 15 wt%. In yet another non-limiting example, the amount of latex polymer particles ranges from about 1 wt% to about 10 wt%. In a further non-limiting example, the amount of latex polymer particles ranges from about 3 wt% to about 6 wt%. It is to be understood that a smaller amount of latex polymer particles (less than 40 wt%) is used in the latex coating composition disclosed herein, at least in part, to substantially prevent clogging of the inkjet nozzles during inkjet printing. In instances where a higher amount of latex particles is used (e.g., greater than 50 wt%, the latex particles may undesirably form a film on the nozzle plate as the water present in the latex coating composition evaporates from the printhead during printing.

The latex polymer particles may be prepared by emulsion polymerization techniques such as batch, semi-batch, or mini-emulsion processes. In some instances, the latex polymer particles may otherwise be prepared by phase separation polymerization or dispersion polymerization.

As used herein, the term "vehicle" (not to be confused with ink vehicle, defined hereinabove) refers to the combination of at least one solvent and water to form a vehicle in which the latex polymer particles are placed to form the latex coating composition. In an embodiment, the vehicle of the latex coating composition includes at least one organic solvent, at least one surfactant, and water. One or more additives may also be included, examples of which include ethylenediaminetetraacetic acid (EDTA), pH adjusting chemicals, biocides, humectants, and/or the like, and/or combinations thereof.

In a non-limiting example, the organic solvent(s) may be present in the vehicle in an amount ranging from about 5 wt% to about 40 wt%. In another non-limiting example, the organic solvent(s) may be present in the vehicle in an amount ranging from about 5 wt% to about 20 wt%. Examples of suitable organic solvents for the vehicle of the coating composition include aqueous solvents selected from water, 2-pyrrolidone, N-methylpyrrolidone, primary and secondary alcohols such as 1,2-pentanediol, 1,2-hexanediol, and 1,6-hexanediol, and combinations thereof.

The surfactant(s) may be present in the vehicle in an amount ranging from about 0.1 wt% to about 20 wt%. In another example, the surfactant(s) may be present in the vehicle in an amount ranging from about 0.1 wt% to about 2 wt%. Examples of surfactants for the vehicle of the coating composition include reactive surfactants, such as Hitenol™ (polyoxyethylene alkylphenyl ether ammonium sulfate) and Noigen™ (polyoxyethylene alkylphenyl ether), which are commercially available from Dai-Ichi Kogyo Seiyaku Co., Ltd. of Japan; TREM™ sulfosuccinates, which are commercially available from Henkel; and the Maxemul™ (anionic phosphate ester) reactive surfactants commercially available from Uniqema of The Netherlands. Suitable grades of some of the materials listed above may include Hitenol BC-20, Noizen RN-30, TREM LT-40, and Maxemul 6106 and 6112.

In an embodiment, the latex coating composition does not include a colorant. Accordingly, the coating composition forms a substantially optically clear film on the medium/printed image when the coating composition is established thereon. It is to be understood that the latex coating composition in solution (i.e., prior to being established to form the film) may not be optically clear, at least in part because the latex particles therein will scatter light. However, during film formation, the particles aggregate together to form an integrated optically clear film. As used herein, a "substantially optically clear film" refers to a film formed upon drying the coating composition after the composition has been established on the medium and/or printed image, where such film does not exhibit or exhibits minimal color, and/or transmits more than 90% of light (in the visible spectrum range) incident thereon. As such, the substantially clear film may be completely clear or transparent, or may be a slight variation thereof. In instances where the film is completely clear, such film may also be referred to as being clear.

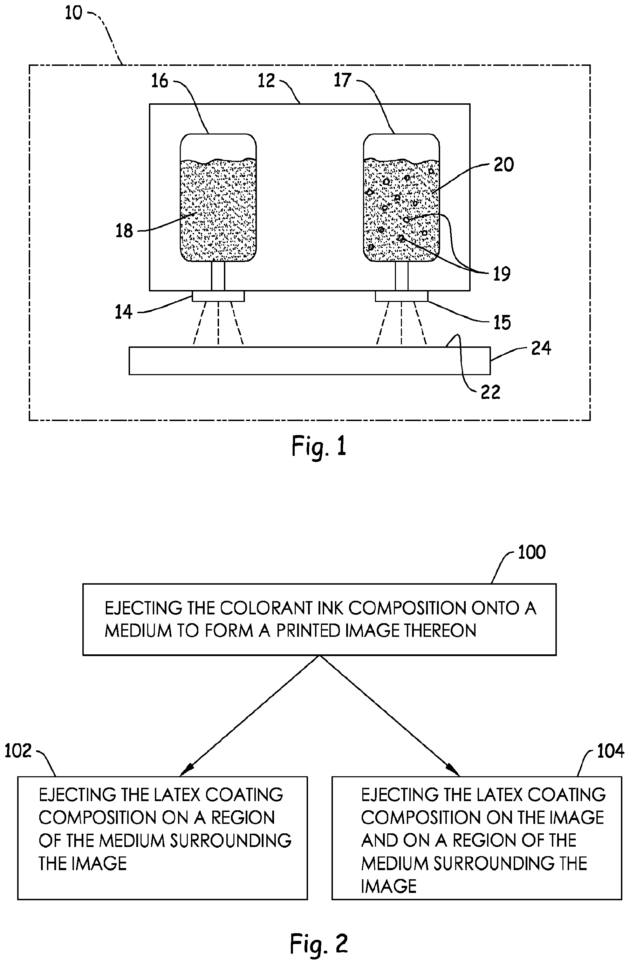

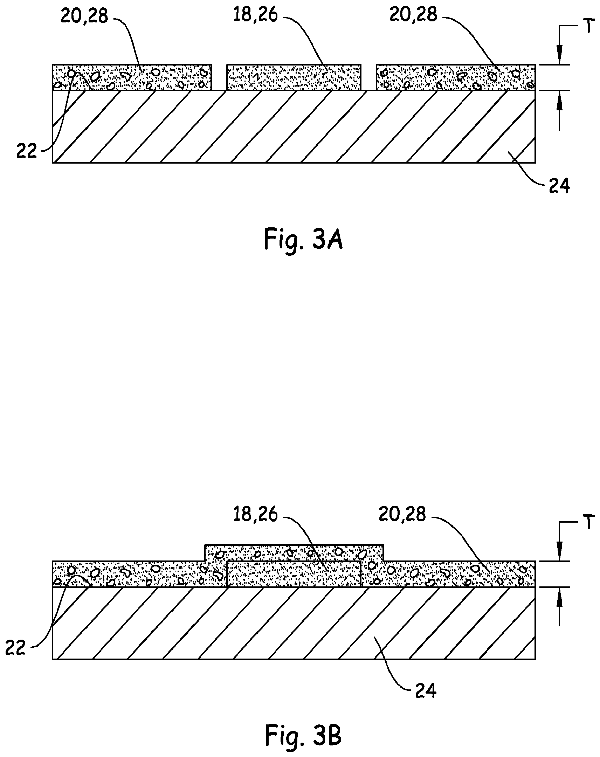

It is to be understood that, in some instances, a colorant may desirably be incorporated into the latex coating composition to impart a desirable optical effect to the printed image. Such an optical effect may include, for example, a slight change in the color of the film. When the film is formed over the printed image, the color of the film will likely change, tint, or otherwise skew the color(s) of the underlying printed image. It is to be understood, however, that although the color of the film is slightly changed, the film is still transparent enough so that any underlying image can still be seen. Further details of a method of establishing the coating composition on the medium/printed image is provided hereinbelow in conjunction with Figs. 2 and 3.

The ink composition and the latex coating composition may suitably be used on many types of media, including, but not limited to vinyl media, cellulose-based paper media (coated or uncoated), various cloth materials, polymeric materials (e.g., polyester white film or polyester transparent film), photopaper (e.g., polyethylene or polypropylene extruded on one or both sides of the paper), metals, and/or mixtures thereof. A non-limitative example of a suitable metal material is a metal in foil form made from, e.g., at least one of aluminum, silver, tin, copper, alloys thereof, and/or mixtures thereof.

Referring now to Fig. 1, an inkjet printing system according to an embodiment of the instant disclosure is semi-schematically depicted by reference numeral 10. The system 10 includes an inkjet printing device 12 (such as, e.g., a continuous device, a drop-on-demand device, a thermal inkjet (TIJ) device, or a piezoelectric inkjet device) having two inkjet fluid ejectors 14, 15. Each of the fluid ejectors 14, 15 is fluidically coupled to a respective reservoir 16, 17. In a non-limiting example, one of the reservoirs of the system 10 (e.g., the reservoir 16) contains the colorant inkjet ink composition (identified by reference numeral 18) and the other of the reservoirs (e.g., the reservoir 17) contains the latex coating composition (identified by reference numeral 20). The latex coating composition 20, as shown in Fig. 1, includes the latex polymer particles, which are identified by reference numeral 19. Each of the fluid ejectors 14, 15 is configured to eject the ink composition 18 and the latex coating composition 20 onto the medium and/or printed image, where such compositions 18, 20 are retrieved from their respective reservoirs 16, 17 during printing.

It is to be understood that the printing device 12 may also include additional fluid ejectors (not shown in Fig. 1), each of which is fluidically coupled to at least one other reservoir (also not shown in Fig. 1). For example, the inkjet printing system 10 may include an ink set having two or more inks, each of which is stored in a respective reservoir, and the latex coating composition (e.g., composition 20) stored in a separate reservoir (e.g., reservoir 17). The ink reservoirs may be in fluid communication with a single fluid ejector, or may be in fluid communication with their own respective fluid ejectors.

Embodiment(s) of the inkjet printing system 10 may be used to perform an inkjet printing method. Examples of such method are diagrammatically shown in Fig. 2. It is to be understood that the examples of the method disclosed herein may be used to control optical density of a print. As used herein, the term "print" refers to a medium having a printed image established thereon. In many instances, the optical density is improved for prints having the coating composition established thereon, compared to those prints without the coating composition. In some embodiments, the optical density of a print may be altered as desired to achieve a preferred visual optical effect. Such embodiments will be described in further detail below.

As shown in Figs. 2, 3A, and 3B, the inkjet printing method includes ejecting, via the inkjet fluid ejector 14, the colorant ink composition 18 onto a surface 22 of a medium 24 to form a printed image 26 thereon (identified by reference numeral 100 in Fig. 2). In an example, the printed image 26 is formed by preparing the ink composition 18 (as described above) and establishing the ink composition 18 on the medium 24.

Referring specifically to the embodiment shown in Figs. 2 and 3A, the method further includes ejecting, via the fluid ejector 15, the latex coating composition 20 on a region of the medium 24 surrounding the image 26 (identified by reference numeral 102 in Fig. 2). The region of the medium 24 surrounding the image 26 includes at least a portion of one or more areas of the surface 22 that do not have the ink composition 18 established thereon. In a non-limiting example, the coating composition 20 is established on all of the areas of the surface 22 that are not covered by the ink composition 18. In another non-limiting example, the coating composition 20 is established on the surface 22 just along the periphery of the area covered by the ink composition 18 (i.e., along the periphery of the printed image 26).

Referring specifically to the embodiment shown in Figs. 2 and 3B, the method further includes ejecting, via the fluid ejector 15, the latex coating composition 20 on the printed image 26 and on the region of the medium 24 surrounding the image 26 (identified by reference numeral 104 in Fig. 2). In a non-limiting example, the coating composition 20 is established over the printed image 26 and over all of the areas of the surface 22 that are not covered by the ink composition 18. In another non-limiting example, the coating composition 20 is established over the printed image 26 and on the surface 22 just along the periphery of the printed image 26.

The establishing of the latex coating composition 20 may be accomplished by depositing, via the fluid ejector 15, a predetermined amount of the coating composition 20 on the medium 24 (Fig. 3A) or the printed image 26 and the medium 24 (Fig. 3B), and drying the deposited coating composition 20 to form a substantially clear film 28. Drying of the coating composition 20 may accomplished using heat (e.g., via a dryer). Drying may otherwise be accomplished by allowing the coating composition 20 to cool to room temperature. It is to be understood that when the coating composition 20 is dried, the latex particles form a polymeric film on the regions or areas of the medium 24 (or the printed image 26 and the medium 24) covered by the coating 20. The polymeric film generally does not include any cross-linking, except in instances where a cross-linker is used. In such instances, intra-particle cross-linking occurs.

The establishing of the coating composition 20 may, in an example, be accomplished during the same pass (or cycle) as the ink composition 18. In some instances, the establishing of the coating composition 20 and the ink composition 18 during the same pass improves printing speed. In another example, the coating composition 20 may be established during a separate pass (or cycle) after the ink composition 18 has already been established on medium 24. In this latter embodiment, establishing of the coating composition 20 may be accomplished when the ink 18 established on the medium 24 is wet and/or dry.

The prints formed using embodiment(s) of the inkjet printing system 10 advantageously exhibit enhanced optical density, compared to other prints that do not have a latex film 28 formed thereon. This enhancement is accomplished because the film 28 assists in substantially matching the surface properties of the printed image 26 with those of the background area of the medium 24. For instance, the latex coating composition 20 fills in rough portions of the medium surface 22, thereby making the surface 22 smoother and, in many cases, visually more similar to the printed image 26. The coating composition 20 improves an evenness of gloss between the medium surface 22 and the printed image 26. In some instances, the printed image 26 visually appears to be brighter compared to those prints that are formed without a latex film printed according to the method disclosed herein. In a non-limiting example, the optical density of prints formed using the inkjet printing system 10 of the instant disclosure is enhanced by about 0.05 optical density units compared to prints formed without a latex film. It is believed that the optical density of prints formed with the latex film disclosed herein may be increased up to 20% over prints formed without the latex film. In a non-limiting example, the optical density ranges from about 0.1 to about 2.5 depending, at least in part, on the coverage of the ink 18 established on the medium 22 and on the composition of the ink 18. Furthermore, the optical density of the print may also be substantially uniform across the entire surface 22 of the medium 24 (including those areas of the surface 22 covered by the printed image 26 and the film 28).

In an embodiment, the optically clear/substantially optically clear film 28 has a thickness T that is adjustable to provide substantially uniform coverage of the coating composition 20 on the medium 24 or on the printed image 26 and the medium 24, as well as to enhance the durability of the print. The thickness T may depend, at least in part, on the surface characteristics of the medium 24, and the ink coverage (i.e., the printed image 26). In a non-limiting example, the thickness of the latex coating composition 20 established on the medium 24 ranges from about 1 micron to about 20 microns. Furthermore, the thickness T of the film 28 is adjustable to vary the optical density of the print, thereby achieving a preferred or desired optical effect. Without being bound to any theory, it is believed that adjusting the thickness T may advantageously be used to further match/substantially match the surface properties (e.g., the surface roughness, specular reflectance, and gloss) of the printed image 26 (with or without the coating composition 20 established thereon) with that of the background area of the medium 24. For example, an uncoated portion of a medium typically has a surface roughness that is higher than that of the portion of the medium having an image 26 printed thereon. The coating composition 20 disclosed herein may be printed at a thickness that reduces the surface roughness of the medium 24 at such un-imaged areas, thereby creating a smoother surface 22. This may be accomplished by matching the thickness of the printed image 26 when the coating composition 20 is printed adjacent to the image 26, or by applying a uniform thickness of the coating composition 20 across the entire surface 22. In many cases, the quality and optical density of the medium 24 (both imaged and un-imaged regions) is improved or enhanced across the entire surface 22 of the medium 24 when the coating composition 20 is applied having an appropriate thickness. It is to be understood, however, that if the coating composition 20 is too thick (e.g., greater than 20 microns), the coated areas of the medium 24 may, in some instances, appear too glossy.

In a non-limiting example, the thickness T may be adjusted by increasing the amount of the coating composition 20 to be established on the medium 24 or on the printed image 26 and the medium 24 during a single coating cycle. In another non-limiting example, the thickness T may be adjusted by establishing two or more layers of the coating composition 20 on the medium 24 or on the printed image 26 and the medium 24, where such layers have the same smaller thickness T. Establishing two or more layers of the coating composition 20 may be accomplished, for example, during multiple passes or coating cycles, which result in a desirable total thickness. Establishing two or more layers of the coating composition 20 may otherwise be accomplished in real time upon detecting, via one or more sensors in operative communication with a print engine or the like (not shown in the figures), a difference between the optical density of the printed image 26 and that of the surrounding medium 24 (i.e., the background). In this embodiment, additional layers of the coating composition 20 are established until the optical density of the printed image 26 and that of the medium 24 is substantially the same.

It is further believed that improvement and/or enhancement of the optical density may also be based, at least in part, on the film forming ability of the latex particles in the latex coating composition 20, the surface topography of the latex coated regions of the medium 24, and the thickness T of the resulting film.

To further illustrate embodiment(s) of the present disclosure, the following example is given herein. It is to be understood that this example is provided for illustrative purposes and is not to be construed as limiting the scope of the disclosed embodiment(s).

### EXAMPLE

The example of the inkjet printing system provided below was tested on a Hewlett-Packard (HP) Photosmart B9180 printer for evaluation purposes using different kinds of media. In this example, HP Advanced Photo Paper was used.

The latex coating composition was prepared by dispersing 8 wt% of solid latex particles formed from styrene, hexyl methacrylate, and methacrylic acid in a liquid vehicle. The liquid vehicle was prepared by mixing 3 wt% of LEG-1, 4 wt% of 1,2-hexanediol, 7 wt% of 2-pyrrolidinone, 5 wt% glycerol, 0.4 wt% of Surfynol CT-211, 0.2 wt% of Zonyl FSO, 0.5 wt% of Proxel GXL, and a balance of water.

A sample was prepared by printing an HP Photosmart B9180 ink on the HP media using the HP Photosmart printer. Then, the latex coating composition was printed on the media, slightly overlapping the printed image. The thickness of the coating composition printed on the media was about 2 microns.

A comparative sample was prepared by printing the same HP Photosmart B9180 ink on the HP media using the same HP Photosmart printer as the first sample. A latex coating composition, however, was not printed on the media for the comparative sample.

The optical density of the print having the coating composition established thereon (i.e., the first sample) and that of the print without the coating composition (i.e., the comparative sample) was measured using a Gretag Macbeth D19C densitometer. The optical density of the print without the coating composition established thereon was about 2.05, which the optical density of the print having the coating composition printed thereon was about 2.10.

While several embodiments have been described in detail, it will be apparent to those skilled in the art that the disclosed embodiments may be modified. Therefore, the foregoing description is to be considered exemplary rather than limiting.

## Claims

1. An inkjet printing system (10), comprising:
two inkjet fluid ejectors (14, 15), each fluidically coupled to a respective reservoir (16, 17), one of the reservoirs (16, 17) containing a colorant inkjet ink composition (18), and another of the reservoirs (16, 17) containing a latex coating composition (20);
one of the fluid ejectors (14, 15) being configured to eject the colorant inkjet ink composition (18) onto a medium (24) to form a printed image (26), and another of the fluid ejectors (14, 15) being configured to eject the latex coating composition (20) onto the medium (24): i) on a region of the medium (24) surrounding the printed image (26), or ii) on the printed image (26) and on the region of the medium (24) surrounding the image (26);
**characterised in that** the latex coating composition (20) comprises latex polymer particles (19) dispersed in a vehicle, the latex polymer particles (19) being formed from at least one hydrophobic monomer and at least one acidic monomer.

2. The inkjet printing system (10) as defined in claim 1, wherein the at least one hydrophobic monomer is present in the latex coating composition (20) in an amount up to 98 wt%; and the at least one acidic monomer is present in the latex coating composition (20) in an amount ranging from about 0.5 wt% to about 20 wt%.

3. The inkjet printing system (10) as defined in claims 1 or 2, wherein the latex polymer particles (19) are further formed from at least one cross-linker compound present in the latex coating composition (20) in an amount ranging from about 0.1 wt% to about 15 wt%.

4. The inkjet printing system (10) as defined in any of claims 1 through 3, wherein the at least one hydrophobic monomer is selected from the group consisting of methyl acrylate, methyl methacrylate, ethyl acrylate, ethyl methacrylate, propyl acrylate, propyl methacrylate, butyl acrylate, butyl methacrylate, hexyl acrylate, hexyl methacrylate, 2-ethylhexyl acrylate, 2-ethylhexyl methacrylate, lauryl acrylate, lauryl methacrylate, octadecyl methacrylate, octadecyl acrylate, isobornyl methacrylate, isobornyl acrylate, vinyl acetate, styrene, methylstyrene, vinylbenzene chloride, and combinations thereof.

5. The inkjet printing system (10) as defined in any of claims 1 through 4,
wherein the at least one acidic monomer is selected from the group consisting of acrylic acid, methacrylic acid, itaconic acid, maleic acid, vinyl benzoic acid, derivatives thereof, and combinations thereof.

6. The inkjet printing system (10) as defined in any of claims 1 through 5,
wherein the Tg of the latex polymer particles (19) ranges from about -40°C to about 125°C.

7. The inkjet printing system (10) as defined in any of claims 1 through 6,
wherein the latex polymer particles (19) are present in the latex coating composition (20) in an amount ranging from about 0.5 wt% to about 40 wt%.

8. The inkjet printing system (10) as defined in any of claims 1 through 7,
wherein the vehicle includes:
about 5 wt% to about 40 wt% of at least one organic solvent;
about 0.1 wt% to about 20 wt% of at least one surfactant;
about 0.01 wt% to about 0.5 wt% of a biocide; and
water.

9. The inkjet printing system (10) as defined in any of the preceding claims,
wherein the optical density of the printed image (26) ranges from about 0.1 to about 2.5, and wherein the thickness of the latex coating composition (20) ejected onto the medium (24) ranges from about 1 micron to about 20 microns.

10. A method of operating an inkjet printing system (10), the inkjet printing system (10) comprising
two inkjet fluid ejectors (14, 15), each fluidically coupled to a respective reservoir (16, 17), one of the reservoirs (16, 17) containing a colorant inkjet ink composition (18), and another of the reservoirs (16, 17) containing a clear latex coating composition (20);
wherein the latex coating composition (20) comprises latex polymer particles (19) dispersed in a vehicle, the latex polymer particles (19) being formed from at least one hydrophobic monomer and at least one acidic monomer;
the method of operating including: ejecting, via one of the inkjet fluid ejectors (14, 15), the colorant inkjet ink composition (18) onto a medium (24) to form a printed image (26) thereon; and
establishing, via another of the inkjet fluid ejectors (14, 15), the latex coating composition (20) i) on a region of the medium (24) surrounding the image (26), or ii) on the printed image (26) and the region of the medium (24) surrounding the image (26).

11. The method as defined in claim 10, wherein the establishing of the latex coating composition (20) includes:
depositing, via the other of the inkjet fluid ejectors (14, 15), a predetermined amount of the latex coating composition (20) i) on the region of the medium (24) surrounding the printed image (26), or ii) on the printed image (26) and the region of the medium (24) surrounding the image (26); and
drying the latex composition (20) to form a substantially clear film, the substantially clear film having a thickness (T).

12. The method as defined in claim 11, wherein the method further comprises adjusting the amount of the latex coating composition (20) to be deposited to form the substantially clear film having another thickness (T), the other thickness (T) enabling a desired optical effect.

13. The method as defined in any of claims 10 through 12, wherein the forming of the inkjet printed image (26) on the medium (24) comprises:
preparing an ink (18), the ink including:
at least one of a dye or a pigment; and
an ink vehicle; and
establishing the ink (18) on the medium (24).

14. The method as defined in any of claims 10 through 13, wherein the optical density of the inkjet printed image (26) ranges from about 0.1 to about 2.5, and wherein the thickness (T) of the latex coating composition (20) ejected onto the medium (24) ranges from about 1 micron to about 20 microns.

## Patentansprüche

1. Tintenstrahldrucksystem (10), das Folgendes umfasst:
zwei Tintenstrahlflüssigkeitsejektoren (14; 15), wobei jeder fluid mit einem entsprechenden Tank (16; 17) gekoppelt ist, wobei einer der Tanks (16; 17) eine Farbstoff-Tintenstrahltintenzusammensetzung (18) enthält, und wobei ein anderer der Tanks (16; 17) eine Latexbeschichtungszusammensetzung (20) enthält;
wobei einer der Flüssigkeitsejektoren (14; 15) konfiguriert ist, um die Farbstoff-Tintenstrahltintenzusammensetzung (18) auf ein Medium (24) auszugeben, um ein gedrucktes Bild (26) zu bilden, und wobei ein anderer der Flüssigkeitsejektoren (14; 15) konfiguriert ist, um die Latexbeschichtungszusammensetzung (20) auf das Medium (24) auszugeben: i) auf einen Bereich des Mediums (24), der das gedruckte Bild (26) umgibt, oder ii) auf das gedruckte Bild (26) und auf den Bereich des Mediums (24), der das Bild (26) umgibt;
**dadurch gekennzeichnet, dass** die Latexbeschichtungszusammensetzung (20) Latexpolymerpartikel (19) umfasst, die in einem Transportmittel verteilt sind, wobei die Latexpolymerpartikel (19) aus wenigstens einem hydrophoben Monomer und wenigstens einem sauren Monomer gebildet werden.

2. Tintenstrahldrucksystem (10) nach Anspruch 1, wobei das wenigstens eine hydrophobe Monomer in der Latexbeschichtungszusammensetzung (20) in einer Menge von bis zu 98 Gew.-% vorhanden ist, und wobei das wenigstens eine saure Monomer in der Latexbeschichtungszusammensetzung (20) in einer Menge vorhanden ist, die von etwa 0,5 Gew.-% bis etwa 20 Gew.-% reicht.

3. Tintenstrahldrucksystem (10) nach Anspruch 1 oder 2, wobei die Latexpolymerpartikel (19) ferner aus wenigstens einer Vernetzerverbindung gebildet sind, die in der Latexbeschichtungszusammensetzung (20) in einer Menge vorhanden ist, die von etwa 0,1 Gew.-% bis etwa 15 Gew.-% reicht.

4. Tintenstrahldrucksystem (10) nach einem der Ansprüche 1 bis 3, wobei das wenigstens eine hydrophobe Monomer ausgewählt ist aus der Gruppe bestehend aus Methylacrylat, Methylmethacrylat, Ethylacrylat, Ethylmethacrylat, Propylacrylat, Propylmethacrylat, Butylacrylat, Butylmethacrylat, Hexylacrylat, Hexylmethacrylat, 2-Ethylhexylacrylat, 2-Ethylhexylmethacrylat, Laurylacrylat, Laurylmethacrylat, Octadecylmethacrylat, Octadecylacrylat, Isobornylmethacrylat, Isobornylacrylat, Vinylacetat, Styrol, Metylstyrol, Vinylbenzolchlorid und Kombinationen davon.

5. Tintenstrahldrucksystem (10) nach einem der Ansprüche 1 bis 4, wobei das wenigstens eine saure Monomer ausgewählt ist aus der Gruppe bestehend aus Acrylsäure, Methacrylsäure, Itaconsäure, Maleinsäure, Vinylbenzoesäure, Derivaten davon und Kombinationen davon.

6. Tintenstrahldrucksystem (10) nach einem der Ansprüche 1 bis 5, wobei die Tg der Latexpolymerpartikel (19) von etwa -40 °C bis etwa 125 °C reicht.

7. Tintenstrahldrucksystem (10) nach einem der Ansprüche 1 bis 6, wobei die Latexpolymerpartikel (19) in der Latexbeschichtungszusammensetzung (20) in einer Menge vorhanden sind, die von etwa 0,5 Gew.-% bis etwa 40 Gew.-% reicht.

8. Tintenstrahldrucksystem (10) nach einem der Ansprüche 1 bis 7, wobei das Transportmittel Folgendes einschließt:
etwa 5 Gew.-% bis etwa 40 Gew.-% von wenigstens einer organischen Lösung;
etwa 0,1 Gew.-% bis etwa 20 Gew.-% von wenigstens einem Tensid;
etwa 0,01 Gew.-% bis etwa 0,5 Gew.-% eines Biozids und
Wasser.

9. Tintenstrahldrucksystem (10) nach einem der vorhergehenden Ansprüche, wobei die optische Dichte des gedruckten Bildes (26) von etwa 0,1 bis etwa 2,5 reicht, und wobei die Dicke der Latexbeschichtungszusammensetzung (20), die auf das Medium (24) ausgegeben wird, von etwa 1 Mikron bis etwa 20 Mikron reicht.

10. Verfahren zum Betreiben eines Tintenstrahldrucksystems (10), wobei das Tintenstrahldrucksystem (10) Folgendes umfasst:
zwei Tintenstrahlflüssigkeitsejektoren (14; 15), wobei jeder fluid mit einem entsprechenden Tank (16; 17) gekoppelt ist, wobei einer der Tanks (16; 17) eine Farbstoff-Tintenstrahltintenzusammensetzung (18) enthält, und wobei ein anderer der Tanks (16; 17) eine durchsichtige Latexbeschichtungszusammensetzung (20) enthält;
wobei die Latexbeschichtungszusammensetzung (20) Latexpolymerpartikel (19) umfasst, die in einem Transportmittel verteilt sind, wobei die Latexpolymerpartikel (19) aus wenigstens einem hydrophoben Monomer und wenigstens einem sauren Monomer gebildet sind;
wobei das Verfahren zum Betreiben Folgendes einschließt: Ausgeben über einen der Tintenstrahlflüssigkeitsejektoren (14; 15) der Farbstoff-Tintenstrahltintenzusammensetzung (18) auf ein Medium (24), um darauf ein gedrucktes Bild (26) zu bilden; und
Aufbringen über einen anderen der Tintenstrahlflüssigkeitsejektoren (14; 15) der Latexbeschichtungszusammensetzung (20): i) auf einen Bereich des Mediums (24), der das Bild (26) umgibt, oder ii) auf das gedruckte Bild (26) und den Bereich des Mediums (24), der das Bild (26) umgibt.

11. Verfahren nach Anspruch 10, wobei das Aufbringen der Latexbeschichtungszusammensetzung (20) Folgendes einschließt:
Auftragen, über den anderen der Tintenstrahlflüssigkeitsejektoren (14; 15), einer vorbestimmten Menge der Latexbeschichtungszusammensetzung (20) i) auf den Bereich des Mediums (24), der das gedruckte Bild (26) umgibt, oder ii) auf das gedruckte Bild (26) und den Bereich des Mediums (24), der das Bild (26) umgibt; und
Trocknen der Latexzusammensetzung (20), um einen im Wesentlichen durchsichtigen Film zu bilden, wobei der im Wesentlichen durchsichtige Film eine Dicke (T) aufweist.

12. Verfahren nach Anspruch 11, wobei das Verfahren ferner ein Anpassen der Menge der Latexbeschichtungszusammensetzung (20) umfasst, die aufgetragen werden soll, um den im Wesentlichen durchsichtigen Film zu bilden, der eine andere Dicke (T) aufweist, wobei die andere Dicke (T) einen gewünschten optischen Effekt ermöglicht.

13. Verfahren nach einem der Ansprüche 10 bis 12, wobei das Bilden des tintenstrahlgedruckten Bildes (26) auf dem Medium (24) Folgendes umfasst:
Herstellen einer Tinte (18), wobei die Tinte Folgendes einschließt:
wenigstens eines von einer Farbe oder einem Pigment; und
ein Tintentransportmittel; und
Aufbringen der Tinte (18) auf das Medium (24).

14. Verfahren nach einem der Ansprüche 10 bis 13, wobei die optische Dichte des tintenstrahlgedruckten Bildes (26) von etwa 0,1 bis etwa 2,5 reicht, und wobei die Dicke (T) der Latexbeschichtungszusammensetzung (20), die auf das Medium (24) ausgegeben wird, von etwa 1 Mikron bis etwa 20 Mikron reicht.

## Revendications

1. Système d'impression à jet d'encre (10), comprenant :
deux éjecteurs de fluide à jet d'encre (14, 15), chacun couplé fluidiquement à un réservoir respectif (16, 17), l'un des réservoirs (16, 17) contenant une composition d'encre à jet d'encre colorante (18), et un autre des réservoirs (16, 17) contenant une composition de revêtement au latex (20) ;
l'un des éjecteurs de fluide (14, 15) étant configuré pour éjecter la composition d'encre à jet d'encre colorante (18) sur un support (24) pour former une image imprimée (26), et un autre des éjecteurs de fluide (14, 15) étant configuré pour éjecter la composition de revêtement au latex (20) sur le support (24) : i) sur une région du support (24) entourant l'image imprimée (26), ou ii) sur l'image imprimée (26) et sur la région du support (24) entourant l'image (26) ;
**caractérisé en ce que** la composition de revêtement au latex (20) comprend des particules de polymère de latex (19) dispersées dans un véhicule, les particules de polymère de latex (19) étant formées à partir d'au moins un monomère hydrophobe et d'au moins un monomère acide.

2. Système d'impression à jet d'encre (10) selon la revendication 1, dans lequel l'au moins un monomère hydrophobe est présent dans la composition de revêtement au latex (20) dans une quantité allant jusqu'à 98 % en poids ; et l'au moins un monomère acide est présent dans la composition de revêtement au latex (20) dans une quantité allant d'environ 0,5 % en poids à environ 20 % en poids.

3. Système d'impression à jet d'encre (10) selon les revendications 1 ou 2, dans lequel les particules de polymère de latex (19) sont en outre formées d'au moins un composé de réticulation présent dans la composition de revêtement au latex (20) dans une quantité allant d'environ 0,1 % en poids à environ 15 % en poids.

4. Système d'impression à jet d'encre (10) selon l'une quelconque des revendications 1 à 3, dans lequel l'au moins un monomère hydrophobe est choisi dans le groupe constitué d'acrylate de méthyle, de méthacrylate de méthyle, d'acrylate d'éthyle, de méthacrylate d'éthyle, d'acrylate de propyle, de méthacrylate de propyle, d'acrylate de butyle, de méthacrylate de butyle, d'acrylate d'hexyle, de méthacrylate d'hexyle, d'acrylate de 2-éthylhexyle, de méthacrylate de 2-éthylhexyle, d'acrylate de lauryle, de méthacrylate de lauryle, de méthacrylate d'octadécyle, d'acrylate d'octadécyle, de méthacrylate d'isobornyle, d'acrylate d'isobornyle, d'acétate de vinyle, de styrène, de méthylstyrène, de chlorure de vinylbenzène et de combinaisons de ces derniers.

5. Système d'impression à jet d'encre (10) selon l'une quelconque des revendications 1 à 4, dans lequel l'au moins un acide monomère est choisi dans le groupe constitué d'acide acrylique, d'acide méthacrylique, d'acide itaconique, d'acide maléique, d'acide vinylbenzoïque, de dérivés de ces derniers et de combinaisons de ces derniers.

6. Système d'impression à jet d'encre (10) selon l'une quelconque des revendications 1 à 5, dans lequel la Tg des particules de polymère de latex (19) est comprises entre environ -40 °C et environ 125 °C.

7. Système d'impression à jet d'encre (10) selon l'une quelconque des revendications 1 à 6, dans lequel les particules de polymère de latex (19) sont présentes dans la composition de revêtement au latex (20) dans une quantité allant d'environ 0,5 % en poids à environ 40 % en poids.

8. Système d'impression à jet d'encre (10) selon l'une quelconque des revendications 1 à 7, dans lequel le véhicule comporte :
environ 5 % en poids à environ 40 % en poids d'au moins un solvant organique ;
environ 0,1 % en poids à environ 20 % en poids d'au moins un tensioactif ;
environ 0,01 % en poids à environ 0,5 % en poids d'un biocide ; et
de l'eau.

9. Système d'impression à jet d'encre (10) selon l'une quelconque des revendications précédentes, dans lequel la densité optique de l'image imprimée (26) est comprise entre environ 0,1 et environ 2,5, et l'épaisseur de la composition de revêtement au latex (20) éjectée sur le support (24) étant comprise entre environ 1 micron et environ 20 microns.

10. Procédé de fonctionnement d'un système d'impression à jet d'encre (10), le système d'impression à jet d'encre (10) comprenant
deux éjecteurs de fluide à jet d'encre (14, 15), chacun couplé fluidiquement à un réservoir respectif (16, 17), l'un des réservoirs (16, 17) contenant une composition d'encre à jet d'encre colorante (18), et un autre des réservoirs (16, 17) contenant une composition de revêtement au latex transparente (20) ;
la composition de revêtement au latex (20) comprenant des particules de polymère de latex (19) dispersées dans un véhicule, les particules de polymère de latex (19) étant formées à partir d'au moins un monomère hydrophobe et d'au moins un monomère acide ;
le procédé de fonctionnement comportant : l'éjection, par l'intermédiaire de l'un des éjecteurs de fluide à jet d'encre (14, 15), de la composition d'encre à jet d'encre colorante (18) sur un support (24) pour former une image imprimée (26) sur celui-ci ; et
l'établissement, par l'intermédiaire d'un autre des éjecteurs de fluide à jet d'encre (14, 15), de la composition de revêtement au latex (20) i) sur une région du support (24) entourant l'image (26), ou ii) sur l'image imprimée (26) et la région du support (24) entourant l'image (26).

11. Procédé selon la revendication 10, dans lequel l'établissement de la composition de revêtement au latex (20) comporte :
le dépôt, par l'intermédiaire de l'autre des éjecteurs de fluide à jet d'encre (14, 15), d'une quantité prédéterminée de la composition de revêtement au latex (20) i) sur la région du support (24) entourant l'image imprimée (26), ou ii) sur l'image imprimée (26) et la région du support (24) entourant l'image (26) ; et
le séchage de la composition au latex (20) pour former un film sensiblement transparent, le film sensiblement transparent ayant une épaisseur (T).

12. Procédé selon la revendication 11, dans lequel le procédé comprend en outre l'ajustement de la quantité de la composition de revêtement au latex (20) à déposer pour former le film sensiblement transparent ayant une autre épaisseur (T), l'autre épaisseur (T) permettant un effet optique souhaité.

13. Procédé selon l'une quelconque des revendications 10 à 12, dans lequel la formation de l'image imprimée par jet d'encre (26) sur le support (24) comprend :
la préparation d'une encre (18), l'encre comportant :
au moins un élément parmi un colorant ou un pigment ; et
un véhicule d'encre ; et
l'établissement de l'encre (18) sur le support (24).

14. Procédé selon l'une quelconque des revendications 10 à 13, dans lequel la densité optique de l'image imprimée par jet d'encre (26) est comprise entre environ 0,1 et environ 2,5, et l'épaisseur (T) de la composition de revêtement au latex (20) éjectée sur le support (24) étant comprise entre environ 1 micron et environ 20 microns.
